Europäisches Patentamt

European Patent Office

Office européen des brevets

(11) Veröffentlichungsnummer: **0 265 634 B1**

## EUROPÄISCHE PATENTSCHRIFT

(45) Veröffentlichungstag der Patentschrift: **11.12.91**

(21) Anmeldenummer: **87112775.9**

(22) Anmeldetag: **02.09.87**

(51) Int. Cl.⁵: **G01S 7/52**

(30) Priorität: **01.10.86 DE 3633420**

(43) Veröffentlichungstag der Anmeldung:
**04.05.88 Patentblatt 88/18**

(45) Bekanntmachung des Hinweises auf die
Patenterteilung:
**11.12.91 Patentblatt 91/50**

(84) Benannte Vertragsstaaten:
**DE FR GB**

(56) Entgegenhaltungen:
**DE-A- 3 133 079**
**DE-B- 1 516 629**
**DE-B- 1 566 848**
**US-A- 4 052 692**

(73) Patentinhaber: **Fried. Krupp Gesellschaft mit
beschränkter Haftung
Altendorfer Strasse 103
W-4300 Essen 1(DE)**

(72) Erfinder: **Gerlach, Manfred
Ahauser Strasse 10
W-2800 Bremen 44(DE)**
Erfinder: **Richartz, Hans-Dieter
Kl.Westerholzstrasse 33 A
W-2800 Bremen 44(DE)**

Rank Xerox (UK) Business Services

㊹ **Echolot.**

## Beschreibung

Die Erfindung betrifft ein Echolot, insbesondere ein Vermessungslot, der im Oberbegriff des Anspruchs 1 angegebenen Gattung.

Als Navigations- oder Vermessungslote verwendete Echolote haben in erster Linie die Aufgabe, Echos der Grenzschicht zwischen Wasser und Meeresboden, sog. Bodenechos, lückenlos aufzuzeichnen, um daraus einwandfrei die Wassertiefe ermitteln zu können. Die angestrebte lückenlose Aufzeichnung wird aber dadurch erschwert, daß die empfangenen Bodenchos selten ein direktes Abbild des Sendeimpulses sind. An der Grenzschicht Wasser/Boden bilden sich aufgrund von Unebenheiten Interferenzen aus, die das Bodenecho gegenüber dem Sendeimpuls verformen. So kann die Hüllkurve des Bodenechos Einbrüche zeigen, die Anstiegsflanke des Bodenechos verformt und auch das Echo gegenüber dem Sendeimpuls zeitlich verlängert sein. Beim fahrenden Schiff sind dabei wegen sich ständig ändernden Interferenzstrukturen die Echoamplitudenfluktuationen erheblich.

Um eine eindeutige, scharfe und kontrastreiche Echospur der Grenzschicht Wasser/Boden mittels des als Echoschreiber ausgebildeten Registriergerätes aufzeichnen zu können, wird bei bekannten Echoloten die Verstärkung des Echoverstärkers automatisch oder manuell so weit erhöht, daß das Bodenecho amplitudenmäßig begrenzt wird.

Mit solchen Echoloten ist die Aufzeichnung von Bodenschichtungen und Sedimentlinien nicht möglich. Bodenschichtungen und Sedimentlinien können durch sog. Sedimentechos detektiert werden. Solche Sedimentechos entstehen durch Reflexion des in das Sediment oder die Bodenschicht eindringenden Schallimpulses an der vom Wasser abgekehrten unteren Grenzschicht des Sediments oder der Bodenschicht. Die Amplituden solcher Sedimentechos sind oft erheblich geringer als die des Bodenechos, dessen Amplitude von der Reflexion an der Grenzschicht Wasser/Sediment bestimmt wird, weil die Dämpfung des Schalls in der Sedimentschicht erheblich größer ist als die Dämpfung in einer gleichen Wasserstrecke. Da am Meeresboden reflektierte Schallenergie nicht nur unmittelbar aus der Senkrechten unterhalb des Echolots zurückkommt, sondern aus dem gesamten Bereich der Richtcharakteristik des Echolots, erscheint das Bodenecho gegenüber dem Sendeimpuls verlängert und überdeckt das oder die Sedimentechos der kurz unter der Bodenoberfläche liegenden Sedimentschicht oder Sedimentschichten. Übersteuert man den Echoverstärker, so gehen diese kleineren Sedimentechos im Bodenecho verloren.

Es ist weiterhin ein vorzugsweise als Fischlot verwendetes Echolot der eingangs genannten Art bekannt (DE-PS 15 66 848), bei welchem zur Unterscheidung von Bodenechos und Fischechos, die von Fischschwärmen hervorgerufen werden, die Verstärkung des Registrierverstärkers in mindestens zwei Stufen umgeschaltet werden kann, um so die verschiedenen Echotypen mit unterschiedlicher Intensität zu registrieren bzw. mit unterschiedlichem Schwärzungsgrad aufzuzeichnen. Die Umschaltung der Verstärkung erfolgt in Abhängigkeit von dem Überschreiten einer vorgegebenen Schwelle durch die Momentamplitude der empfangenen Echos. Die von der Schwellenschaltung als Mittelwert der Echoamplituden über mehrere Lotperioden generierte Schwelle paßt sich dabei selbsttätig an die Stärke der Bodenechos an, so daß die schwächeren Fischechos zuverlässig erkannt werden. Echos mit kleineren Amplituden, wie Fischechos, werden dabei grau und Echos mit großen Amplituden, wie Bodenechos, werden schwarz oder umgekehrt geschrieben.

Mit solchen Echoloten lassen sich zwar die Echospuren von Sedimentechos darstellen, jedoch kann wegen der großen Amplitudenfluktuation die Grenzschicht Wasser/Boden nicht scharf begrenzt dargestellt werden, da eine Übersteuerung des Verstärkers aus Gründen der Sedimentechoerkennung nicht zugelassen werden darf.

Der Erfindung liegt die Aufgabe zugrunde, ein Echolot der eingangs genannten Art derart zu verbessern, daß sowohl eine lückenlose und kontrastreiche Darstellung der Echospur von der Grenzschicht Wasser/Boden als auch die Aufzeichnung von Bodenschichtungen und Sedimentlinien möglich ist.

Die Aufgabe ist bei einem Echolot der im Oberbegriff des Anspruchs 1 angegebenen Gattung erfindungsgemäß durch die Merkmale im Kennzeichenteil des Anspruchs 1 gelöst.

Bei dem erfindungsgemäßen Echolot baut sich aufgrund der großen Amplituden der Echostirn der Bodenechos, im folgenden Stirnechos genannt, jeweils eine negative Richtspannung auf, die mit jeder positiven Halbwelle der Echospannung vergrößert wird. Die Amplituden der an dem Registrierverstärker anliegenden Echospannungen werden jeweils um diese Richtspannung reduziert. Von dem Registriergerät können damit nur solche Spannungswerte registriert werden, die größer als diese Richtspannung sind. Diese Bedingung wird von den vom Stirnecho herrührenden ersten positiven Halbwellen und - relativ häufig - von den vom Sedimentecho herrührenden positiven Halbwellen einer jeden Echospannung erfüllt. Sie kann auch erfüllt werden von anderen positiven Halbwellen in den Echospannungen, die von Interferenzerscheinungen herrühren. Während jedoch die von den Sedimentechos herrührenden positiven Halbwellen innerhalb der Echospannungen der Bodenechos zeitlich immer an der gleichen Stelle liegen, werden die von Interferenzen herrührenden positiven Halbwellen in den Echospannungen der einzelnen Bodenechos in ihrem zeitlichen Auftreten statistisch stark schwanken. Dadurch zeichnet das Registriergerät letztere als mehr oder weniger verteilte Punkte auf, während die Sedimentechos als immer an der gleichen Stelle, d. h. Wassertiefe, liegende Punkte registriert werden. Die Integrierfähigkeit des Auges wird daher die Punkte der Sedimentechos als durchgehende Echospur erkennen, insbesondere dann, wenn die Punkte tiefschwarz geschrieben werden, während die anderen Registrierpunkte nur als Grauschleier wahrgenommen werden.

Vorteilhafte Ausführungsformen der Erfindung mit zweckmäßigen Ausgestaltungen und Weiterbildungen ergeben sich aus den weiteren Ansprüchen.

Eine vorteilhafte Ausführungsform der Erfindung ergibt sich dabei aus Anspruch 3. Durch den zusätzlichen Widerstand wird eine Entladung des von Kondensator, Widerstand und Diode gebildeten Differenzierglieds bis zum Empfang des nächsten Bodenechos sichergestellt.

Eine vorteilhafte Ausführungsform der Erfindung ergibt sich auch aus Anspruch 4. Durch diese Verstärkung werden bei Anschluß eines Echoschreibers als Registriergerät, z. B. eines Thermodruckers, die von den positiven Spannungskuppen der Echospannung ausgelösten Registrierpunkte tiefschwarz geschrieben, wodurch die Integrationsfähigkeit des Auges zur Erkennung einer durchgehenden Echospur der Sedimentechos unterstützt wird.

Eine vorteilhafte Ausführungsform der Erfindung ergibt sich auch aus Anspruch 5. Diese Ausführungsform ist bei Einsatz von solchen Echoschreibern oder Thermodruckern von Vorteil, die in mindestens zwei Graustufen oder Schwärzungsgraden aufzeichnen können. Die dritte Diode überträgt die natürliche Form der am Ausgang des Hüllkurvengleichrichters anstehenden Echospannung unmittelbar an den Ausgang der dem Registrierverstärker nachgeschalteten ersten Diode. Dort wird zu dieser Originalechospannung die 50fach verstärkte Echospannung des Stirnechos hinzuaddiert, so daß die Originalechospannung in jedem Fall eine steile Anstiegsflanke erhält.

Die Erfindung ist anhand eines in der Zeichnung dargestellten Ausführungsbeispiels im folgenden näher beschrieben. Es zeigen:

Fig. 1 ein Schaltbild des Empfangsteils eines Echolots,

Fig. 2 eine schematische Darstellung des zeitlichen Verlaufs eines Sendeimpulses mit der Sendedauer

Fig. 3 bis 6 jeweils ein Diagramm des Echospannungsverlaufs in den Punkten 3, 4, 5 bzw. 6 des Schaltbilds in Fig. 1.

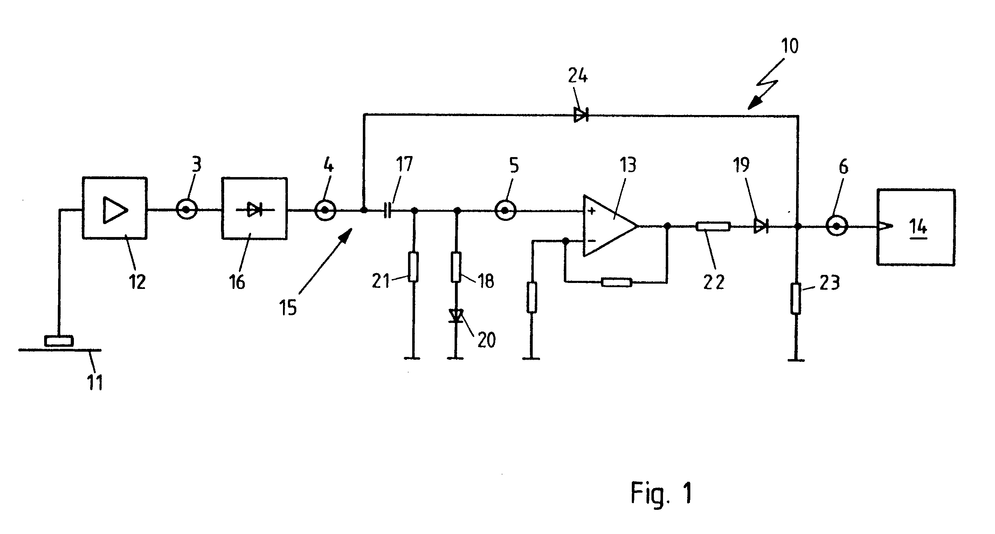

Das in Fig. 1 dargestellte Schaltbild repräsentiert den Empfangsteil 10 eines Echolots. Auf die Darstellung des vielfach bekannten Sendeteils mit Sendeimpulsgenerator und Sendewandler ist - da hier nicht relevant - verzichtet.

Der Empfangsteil 10 weist einen Schallwandler 11 mit Richtcharakteristik zum gerichteten Empfang der von den Sendeimpulsen ausgelösten Echos, einen nicht begrenzenden Vor- oder Echoverstärker 12, einen Registrierverstärker, der als Operationsverstärker 13 ausgebildet ist, und ein über eine erste Diode 19 an dem Registrierverstärker 13 angeschlossenes Registriergerät 14 in Form eines Thermodruckers oder Thermoschreibers 14 auf. Aufbau und Funktion eines Thermoschreibers sind beispielsweise in der DE-OS 31 12 871 beschrieben.

Der Schallwandler 11, der Echoverstärker 12, der Operationsverstärker 13 und der Thermoschreiber 14 sind alle in Reihe geschaltet. Zwischen dem Echoverstärker 12 und dem Operationsverstärker 13 ist eine Gleichrichterschaltung, im folgenden Schwellenschaltung 15 genannt, eingeschaltet, die eine an das Stirnecho des jeweils empfangenen Bodenechos angepaßte Schwelle in Form einer Richtspannung für den Operationsverstärker 13 generiert.

Die Schwellenschaltung 15 weist einen eingangsseitig an dem Ausgang des Echoverstärkers 12 angeschlossenen Hüllkurvengleichrichter 16 und ein den Ausgang des Hüllkurvengleichrichters 16 mit dem nichtinvertierenden Eingang des Operationsverstärkers 13 verbindendes Differenzierglied in Form eines Kondensators 17 und einer dem nichtinvertierenden Eingang des Operationsverstärkers 13 parallelgeschalteten Reihenschaltung aus einem ersten Widerstand 18 und einer zweiten Diode 20 auf. Dieser Reihenschaltung ist ein zweiter Widerstand 21 parallelgeschaltet, dessen Widerstandswert wesentlich größer ist als der des ersten Widerstandes 18. Der Operationsverstärker 13 weist eine 50fache Verstärkung auf und ist ausgangsseitig über die Reihenschaltung eines dritten Widerstandes 22 und der bereits erwähnten Diode 19 mit dem Eingang des Thermoschreibers 14 verbunden. Der Ausgang der Diode 19 ist über einen vierten Widerstand 23 an Nullpotential gelegt.

Bei Verwendung eines Thermoschreibers 14, der mindestens in zwei Graustufen oder Schwärzungsgraden aufzeichnen kann, wie dies in der DE-OS 31 12 871 beschrieben ist, ist es von Vorteil, den Ausgang des Hüllkurvengleichrichters 16 über eine dritte Diode 24 an den Ausgang der ersten Diode 19, also unmittelbar an den Eingang des Thermoschreibers 14, zu legen.

Die Wirkungsweise des vorstehend beschriebenen Echolots ist wie folgt.

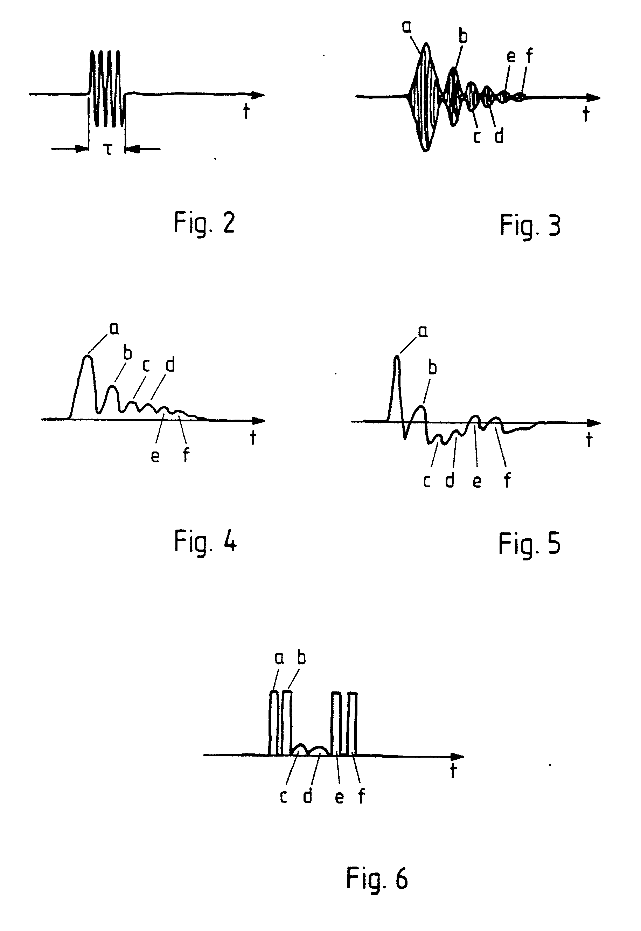

Mittels des nicht dargestellten Sendewandlers werden Schallimpulse mit der Sendedauer τ senkrecht nach unten zum Meeresboden hin ausgesendet. Ein Sendeimpuls ist in Fig. 2 schematisch dargestellt. Die durch Reflexion der Schallimpulse am oder im Meeresboden ausgelösten Echos werden von dem Schallwandler 11 empfangen, in eine elektrische Spannung umgewandelt und von dem nicht begrenzenden Echoverstärker 12 verstärkt. Am Ausgang des Echoverstärkers 12 liegt eine Echospannung an, wie sie in Fig. 3 schematisch skizziert ist. Wie schon eingangs erwähnt, ist das Bodenecho gegenüber dem Sendeimpuls verlängert, da Schallenergie nicht nur unmittelbar vom Meeresboden aus der Senkrechten unterhalb des Schallwandlers 11 zurückkommt, sondern aus dem gesamten Bereich der Wandlerrichtcharakteristik. Das Bodenecho zeigt am Anfang eine deutliche Echostirn, die von der Reflexion des Schallimpulses an der Grenzschicht Wasser/Boden ausgelöst wird, das sog. Stirnecho. Danach ist ein Abschnitt zu erkennen, in welchem die Hüllkurve des Bodenechos durch Interferenzen zerrissen ist. Schließlich ist in dem Bodenecho noch ein Sedimentecho eingebettet, das wegen der größeren Dämpfung in der Sedimentschicht eine wesentlich kleinere Amplitude als das Stirnecho aufweist und zeitlich später erscheint, da die Sedimentschicht unter der Oberfläche des Meeresbodens, also zeitlich gesehen hinter der Grenzschicht Wasser/Boden den liegt.

Nach Durchlaufen des Hüllkurvengleichrichters 16 weist die Echospannung des Bodenechos den in Fig. 4 dargestellten Verlauf auf. Die positive Halbwelle a kennzeichnet das an der Grenzschicht Wasser/Boden ausgelöste Stirnecho, die Halbwelle e das von der unteren Grenzschicht einer unter der Bodenoberfläche liegenden Sedimentschicht ausgelöste Sedimentecho, während die Halbwellen b, c, d und f von Einbrüchen in der Hüllkurve des Bodenechos infolge von Interferenzerscheinungen herrühren. Die am Ausgang des Hüllkurvengleichrichters 16 im Punkte 4 liegende Echospannung wird über den Kondensator 17 und den niederohmigen Widerstand 18 differenziert. Da in Reihe mit dem Widerstand 18 die Diode 20 liegt, baut sich am Punkte 5, also am nichtinvertierenden Eingang des Operationsverstärkers 13, eine negative Richtspannung auf, sobald die positive Halbwelle a der Echospannung den Kondesator 17 passiert hat. Die Richtspannung baut sich mit einer Zeitkonstanten ab, die von der Kapazität des Kondensators 17 und dem Widerstandswert des Widerstandes 21 bestimmt ist. Jede der Halbwelle a folgende, genügend große positive Halbwelle der Echospannung vergrößert jedoch die negative Richtspannung im Punkte 5. Am nichtinvertierenden Eingang des Operationsverstärkers 13 ergibt sich ein Spannungsverlauf, wie er in Fig. 5 schematisch skizziert ist. Nur die Kuppen der größeren Halbwellen ragen in den Bereich positiver Spannungen und vermögen damit ein Ausgangssignal im Operationsverstärker 13 zu erzeugen, das die erste Diode 19 passieren kann. Die Signalspannung am Ausgang der Diode 19 - im Punkte 6 - ist in Fig. 6 schematisch dargestellt. Die von den positiven Halbwellen a, b, e und f ausgelösten Schreibimpulse gelangen an den Thermoschreiber 14 und erzeugen hier jeweils einen Lotpunkt. Da bei angenommener, konstanter Wassertiefe und Sedimentschichttiefe die Kuppen der Halbwellen a und e zeitlich immer an derselben Stelle liegen, die durch Interferenzstrukturen bedingten Kuppen der Halbwellen b, c, d und f jedoch zeitlich gesehen in ihrer Lage, Größe und Häufigkeit stark schwanken, wird im Thermodrucker 14 von den Schreibimpulsen a und e jeweils eine durchgehende Spur, erzeugt, während aufgrund der statistisch in ihrer Lage schwankenden Schreibimpulse b und f oder mitunter auch c und d ein unregelmäßiger Punkthaufen geschrieben wird. Die ersten von dem Stirnecho herrührenden Halbwellen a werden lückenlos registriert. Die Halbwelle e der Echospannungen schwankt in der Amplitude von Bodenecho zu Bodenecho stark, so daß bei einigen der Sedimentechos die Halbwellen nicht groß genug sind, in den positiven Spannungsbereich vorzudringen und damit einen Schreibimpuls auszulösen. Da jedoch alle diese von den Sedimentechos erzeugten Halbwellen innerhalb der Echospannung zeitlich immer an der gleichen Stelle liegen - und damit die Lotpunkte immer in etwa gleicher Lottiefe ausgedruckt werden - reicht die Integrierfähigkeit des Auges aus, die durch diese Schreibimpulse auf dem Registrierpapier hervorgerufene, punktuelle Schwärzung als Echospur zu identifizieren. Das Auge wird dabei dadurch unterstützt, daß alle Spannungskuppen, die im Punkte 5 der Schaltung in den positiven Bereich vordringen, 50fach verstärkt und damit von dem Thermoschreiber 14 tiefschwarz gedruckt werden. Diese tiefschwarzen Punkte, die entsprechend der Tiefe der Sedimentschicht sich auf dem Ausdruck des Thermoschreibers 14 längs einer Linie ansammeln, erkennt das Auge als deutliche Echospur, während die zwar auch tiefschwarz, jedoch in ihrer Lage statistisch verteilten Punkte, die von den Halbwellen b, c, d und f hervorgerufen werden, nur als Grauschleier wahrgenommen werden.

Die dritte Diode 24 kommt dann zum Einsatz, wenn der Thermoschreiber 14 das Stirnecho und das Sedimentecho im Bodenecho in unterschiedlichen Graustufen oder Schwärzungsgraden aufzeichnen soll und hierzu die von dem Stirnecho und von dem Sedimentecho generierten Schreibimpulse a bzw. e mit unterschiedlicher Intensität an den Eingang des Thermoschreibers 1 4 gelegt werden müssen. Im Punkte 6 erfolgt dabei eine Addition der in Fig. 4 und 6 dargestellten Echospannungen, so daß die an den Thermoschreiber 14 gelangenden Schreibimpulse a bzw. e unterschiedliche Amplituden aufweisen.

## Patentansprüche

1. Echolot, insbesondere Vermessungslot, mit einem Empfangsteil zum Empfangen von durch Beschallung am Gewässergrund hervorgerufenen Bodenechos und Aufzeichnen mindestens einer Echospur, das einen Schallwandler, einen Echoverstärker, einen Registrierverstärker, ein von dem Registrierverstärker angesteuertes Registriergerät, vorzugsweise einen Echoschreiber, und eine Schwellenschaltung zum Generieren einer sich an die Stärke des Bodenechos selbsttätig anpassenden Schwelle für den Registrierverstärker umfaßt, dadurch gekennzeichnet, daß der Schallwandler (11), der Echoverstärker (12) und die Schwellenschaltung (15) in Reihe geschaltet und an dem Eingang des als Operationsverstärker (13) ausgebildeten Registrierverstärkers angeschlossen sind, dessen Ausgang über eine erste Diode (19) mit dem Registriergerät (14) verbunden ist, und daß die Schwellenschaltung (15) einen Hüllkurvengleichrichter (16) und ein den Ausgang des Hüllkurvengleichrichters (16) mit dem Eingang des Operationsverstärkers (13) verbindendes Differenzierglied aus einem Kondensator (17) und einer dem Eingang des Operationsverstärkers (13) parallelgeschalteten Reihenschaltung von Widerstand (18) und zweiter Diode (20) aufweist.

2. Echolot nach Anspruch 1, dadurch gekennzeichnet, daß der Eingang des Operationsverstärkers (13) der nichtinvertierende Eingang des Operationsverstärkers (13) ist.

3. Echolot nach Anspruch 1 oder 2, dadurch gekennzeichnet, daß der Reihenschaltung aus Widerstand (18) und zweiter Diode (20) ein zweiter Widerstand (21) mit gegenüber dem ersten Widerstand (18) größerem Ohmwert parallelgeschaltet ist.

4. Echolot nach einem der Ansprüche 1 bis 3, dadurch gekennzeichnet, daß der Operationsverstärker (13) eine etwa 50fache Verstärkung aufweist.

5. Echolot nach einem der Ansprüche 1 bis 4, dadurch gekennzeichnet, daß der Ausgang des Hüllkurvengleichrichters (16) über eine dritte Diode (24) mit dem Ausgang der ersten Diode (19) verbunden und der Verbindungspunkt über einen dritten Widerstand (23) an Nullpotential gelegt ist.

## Claims

1. Echosounder, especially survey sounder equipped with a reception unit designed for receiving bottom echoes produced by the insonification of bottoms of waters and for recording at least one echo trace and comprising a transducer, an echo amplifier, a recording amplifier, a recorder triggered by the recording amplifier, preferably an echo recorder and a threshold circuit designed for producing for the recording amplifier a threshold adjusting itself automatically to the bottom echo intensity and characterised by the fact that transducer (11), echo amplifier (12) and threshold generator circuit (15) are connected in series and to the recording amplifier input designed as an operational amplifier (13) the output of which is by means of a first diode (19), connected to recorder (14) and further by the fact, that threshold generator circuit (15), comprises an envelope rectifier (16) and a differentiation element connecting the output of envelope rectifier (16) to the input of operational amplifier (13) whereby the differentiation element is composed of capacitor (17) and of a series connection, (composed of resistor (18) and of a second diode (20).), connected in parallel to the input of amplifier (13).

2. Echosounder as per patent claim 1, characterized by the fact, that the input of operational amplifier (13) is the non-inverting input of operational amplifier (13).

3. Echosounder as per patent claim 1 or 2, characterized by the fact, that the series connection, composed of resistor (18) and the second diode (20), was connected in parallel to a second resistor (21) having a higher ohmic value than the first resistor (18).

4. Echosounder as per one of patent claims 1 to 3, characterized by the fact, that operational amplifier (13) has an amplification factor of about 50.

5. Echosounder as per one of patent claims 1 to 4 characterized by the fact, that the output of envelope rectifier (16) is, by means of a third diode (24), connected to the output of first diode (19) and that the connecting point is by means of a third resistor (23), connected to zero potential.

## Revendications

1. Sondeur, notamment sondeur hydrographique doté d'une partie réceptrice destinée à recevoir des échos de fond engendrés par l'insonification de fonds de plans d'eau, à enregistrer au moins une trace d'écho et comprenant un transducteur, un amplificateur d'écho, un amplificateur d'enregistrement, un enregistreur commandé par l'amplificateur d'enregistrement,
auquel cas il s'agit de préférence d'un enregistreur d'échos, et d'un circuit générateur de seuils conçu pour produire pour l'amplificateur d'enregistrement un seuil se réglant automatiquement sur l'intensité de l'écho de fond, caractérisé par le fait que le transducteur (11), l'amplificateur d'écho (12) et le circuit générateur de seuils (15) sont reliés en série et branchés à l'entrée de l'amplificateur d'enregistrement conçu en tant qu'amplificateur opérationnel (13) dont la sortie est, au moyen d'une première diode (19), reliée à l'enregistreur (14) et que le circuit générateur de seuils (15) présente un redresseur d'enveloppante (16) et un élément différenciateur reliant la sortie du redresseur d'enveloppante (16) à l'entrée de l'amplificateur opérationnel (13) auquel cas cet élément différenciateur est constitué d'un condensateur (17), d'un couplage en série, (constitué de la résistance (18) et d'une deuxième diode (20).), relié en parallèle à l'entrée de l'amplificateur (13).

2. Sondeur à ultra-sons conformément à la revendication 1, caractérisé par le fait que l'entrée de l'amplificateur opérationnel (13) est l'entrée non-invertissante de l'amplificateur opérationnel (13).

3. Sondeur à ultra-sons conformément à la revendication 1 ou 2, caractérisé par le fait que l'on a relié en parallèle au couplage en série constitué de la résistance (18) et de la deuxième diode (20), une deuxième résistance (21) à valeur ohmique supérieure à celle de la première résistance (18).

4. Sondeur à ultra-sons conformément à l'une des revendications 1 à 3, caractérisé par le fait que l'amplificateur opérationnel (13) présente un facteur d'amplification d'environ 50.

5. Sondeur à ultra-sons conformément à l'une des revendications de 1 à 4 caractérisé par le fait que la sortie du redresseur d'enveloppante (16), est par l'intermédiaire d'une troisième diode (24), reliée à la sortie de la première diode (19) et que le point de liaison est au moyen d'une troisième résistance (23), mis au potentiel zéro.

Fig. 1

EP 0 265 634 B1

Fig. 2

Fig. 3

Fig. 4

Fig. 5

Fig. 6